# EUROPEAN PATENT APPLICATION

(11) **EP 2 523 252 A1**
(43) Date of publication of application: **14.11.2012**
(21) Application number: 11275114.4
(22) Date of filing: 28.09.2011
(51) Int. Cl.: H01Q 1/24

(54) **Communication terminal and method of manufacturing the same**

(30) Priority: 09.05.2011 KR 20110043488
(71) Applicant: Samsung Electro-Mechanics Co., Ltd., Gyunggi-do (KR)
(72) Inventor: Park, Hyun Do, Gyunggi-do (KR); An, Chan Gwang, Gyunggi-do (KR); Lim, Dae Ki, Gyunggi-do (KR); Nam, Hyun Kil, Gyunggi-do (KR); Hong, Ha Ryong, Gyunggi-do (KR); Cho, Sung Eun, Gyunggid-do (KR); Sung, Jae Suk, Gyunggi-do (KR); Lee, Dae Kyu, Gyunggi-do (KR); Jeon, Dae Seong, Gyunggi-do (KR); Bae, Sang Woo, Gyunggi-do (KR)
(74) Representative: Powell, Timothy John

(57) **Abstract**

There are provided a communication terminal in which an antenna is integrally formed with a case and a method of manufacturing the same. The communication terminal includes: a case forming an external appearance of the communication terminal and having a plurality of fixing protrusions formed on an inner surface thereof; and an antenna inserted between the plurality of fixing protrusions so as to be coupled with the case, wherein the antenna is integrally fixed to the case by an extending portion having a sectional area increased at an end of each of the fixing protrusions.

## Description

### CROSS-REFERENCE TO RELATED APPLICATIONS

This application claims the priority of Korean Patent Application No. 10-2011-0043488 filed on May 9, 2011, in the Korean Intellectual Property Office, the disclosure of which is incorporated herein by reference.

### BACKGROUND OF THE INVENTION

### Field of the Invention

The present invention relates to a communication terminal in which an antenna and a case are integrally formed, and a method of manufacturing the same.

### Description of the Related Art

Recently, communications terminals such as GPS, PDA, cellular phones, wireless notebook computers, or the like, have seen wide spread use, and as portability is stressed, communication terminals are increasingly required to be lighter, thinner, shorter, and smaller. In order to meet the requirements, various techniques for reducing the volume of communication terminals, while maintaining various functions thereof, have been developed.

In line therewith, various attempts have been made to reduce the size of an antenna, an essential part of communication terminals, in order to reduce the volume thereof.

In general, among communication terminal antennas, an external antenna such as a rod antenna or a helical antenna is externally protruded by a certain length from a communication terminal, making it difficult to reduce the size of terminal and degrading portability. Also, such an external antenna may be damaged if the communication terminal is inadvertently dropped.

Meanwhile, an internal antenna, mounted in the interior of a communication terminal, has a less possibility of being damaged compared with an external antenna, but it can be hardly reduced in size due to its physical size.

Thus, recently, research into integration of a radiator of an antenna with a terminal case has been actively ongoing. For example, bonding an antenna to a case with an adhesive, molding an antenna film within a case, or the like, has been presented.

However, the method of bonding an antenna to a case by using an adhesive has a limitation in that if the adhesive force of the adhesive weakens, the antenna is separated from the case.

In addition, the method of molding an antenna within a case has a limitation in that an injection-molded product is bent in a molding process or the antenna may move and therefore fail to be disposed at a precise position.

These problems become serious when a low frequency antenna having a relatively large size is used.

### SUMMARY OF THE INVENTION

An aspect of the present invention provides a communication terminal in which an antenna is integrally formed with a case, and a method of manufacturing the same.

Another aspect of the present invention provides a communication terminal in which a low frequency antenna having a relatively large size is easily integrally formed with a case, and a method of manufacturing the same.

According to an aspect of the present invention, there is provided a communication terminal including: a case forming an external appearance of the communication terminal and having a plurality of fixing protrusions formed on one surface thereof; and an antenna inserted between the plurality of fixing protrusions so as to be coupled with the case, wherein the antenna is integrally fixed to the case by an extending portion having a sectional area increased at an end of each of the fixing protrusions.

The extending portion may be formed such that the end of each of the fixing protrusions is softened and melted.

The extending portion may be formed by ultrasonic welding.

The antenna may be a radiator having a metal pattern shape.

The case may have a coupling recess formed in one surface thereof, and the antenna may be mounted in the coupling recess so as to be coupled therewith.

According to another aspect of the present invention, there is provided a communication terminal including: a case including a support plate having a plurality of fixing protrusions formed on one surface thereof and an injection-molded product covering one surface of the support plate and integrally formed with the support plate; and an antenna interposed between the support plate and the inj ection-molded product and buried in an interior of the case, wherein the antenna is inserted between the fixing protrusions of the support plate and integrally fixed to the support plate by an extending portion having a sectional area increased at an end of each of the fixing protrusions.

The extending portion may be formed such that the end of each of the fixing protrusions is softened and melted.

The extending portion may be formed by ultrasonic welding.

The support plate and the injection-molded product may be made of the same material.

According to another aspect of the present invention, there is provided a method of manufacturing a communication terminal, the method including: preparing a case forming an external appearance of the communication terminal and including a plurality of fixing protrusions formed on one surface thereof; coupling an antenna to the case such that the antenna is inserted between the plurality of fixing protrusions; and forming an extending portion supporting an upper surface of the antenna by increasing a sectional area of an end of each of the fixing protrusions.

The forming of the extending portion may include forming the extending portion by softening and melting the end of each of the fixing protrusions through ultrasonic welding.

According to another aspect of the present invention, there is provided a method of manufacturing a communication terminal, the method including: preparing a support plate including a plurality of fixing protrusions formed on one surface thereof; coupling an antenna to the support plate such that the antenna is inserted between the fixing protrusions of the support plate; and burying the antenna by covering one surface of the support plate with an injection-molded product.

The method may further include forming an extending portion supporting an upper surface of the antenna by increasing a sectional area of the end of each of the fixing protrusions, after the coupling of the antenna to the support plate.

The forming of the extending portion may include forming the extending portion by softening and melting the end of each of the fixing protrusions through ultrasonic welding.

The burying of the antenna may include: disposing the support plate within a mold such that the antenna faces upward; injecting a resin into the mold; and hardening the resin to form the injection-molded product.

The support plate and the injection-molded product may be made of the same material.

### BRIEF DESCRIPTION OF THE DRAWINGS

The above and other aspects, features and other advantages of the present invention will be more clearly understood from the following detailed description taken in conjunction with the accompanying drawings, in which:

FIG. 1 is a partially cut-away perspective view of a communication terminal according to a first embodiment of the present invention;

FIG. 2 is a partially exploded perspective view of the communication terminal of FIG. 1;

FIG. 3 is an enlarged perspective view of portion A of FIG. 2;

FIG. 4 is a cross-sectional view taken along line B-B' of FIG. 3;

FIGS. 5A through 5C are views for explaining a method of manufacturing a communication terminal according to the first embodiment of the present invention;

FIG. 6 is a cross-sectional view of a cover of a communication terminal according to a second embodiment of the present invention;

FIG. 7 is a partially cut-away perspective view of a cover of a communication terminal according to a third embodiment of the present invention; and

FIGS. 8A through 8E are views for explaining a method of manufacturing a communication terminal according to the third embodiment of the present invention.

### DETAILED DESCRIPTION OF THE PREFERRED EMBODIMENT

The terms and words used in the present specification and claims should not be interpreted as being limited to typical meanings or dictionary definitions, but should be construed as having meanings and concepts relevant to the technical scope of the present invention based on the rule according to which an inventor can appropriately define the concept of the term to describe most appropriately the best method he or she knows for carrying out the invention. Therefore, the configurations described in the embodiments and drawings of the present invention are merely the most preferable embodiments but do not represent all of the technical spirit of the present invention. Thus, the present invention should be construed as including all the changes, equivalents, and substitutions included in the spirit and scope of the present invention at the time of filing this application.

Embodiments of the present invention will now be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art. In the drawings, the shapes and dimensions may be exaggerated for clarity, and the same reference numerals will be used throughout to designate the same or like components.

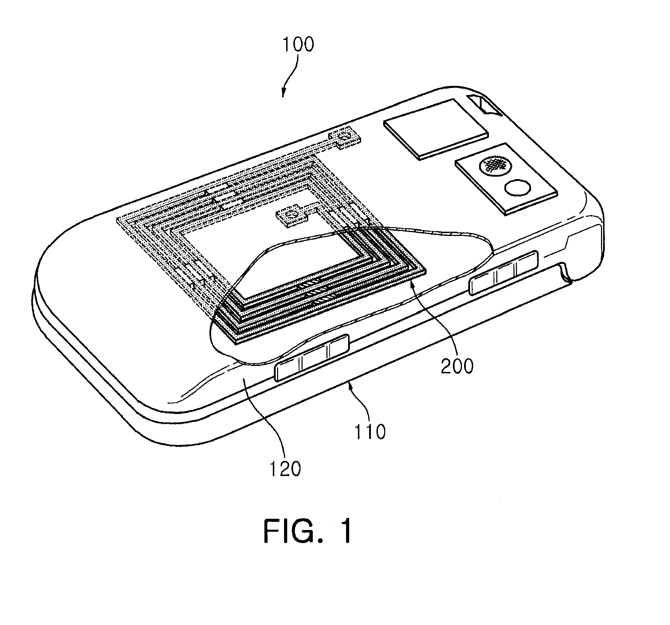

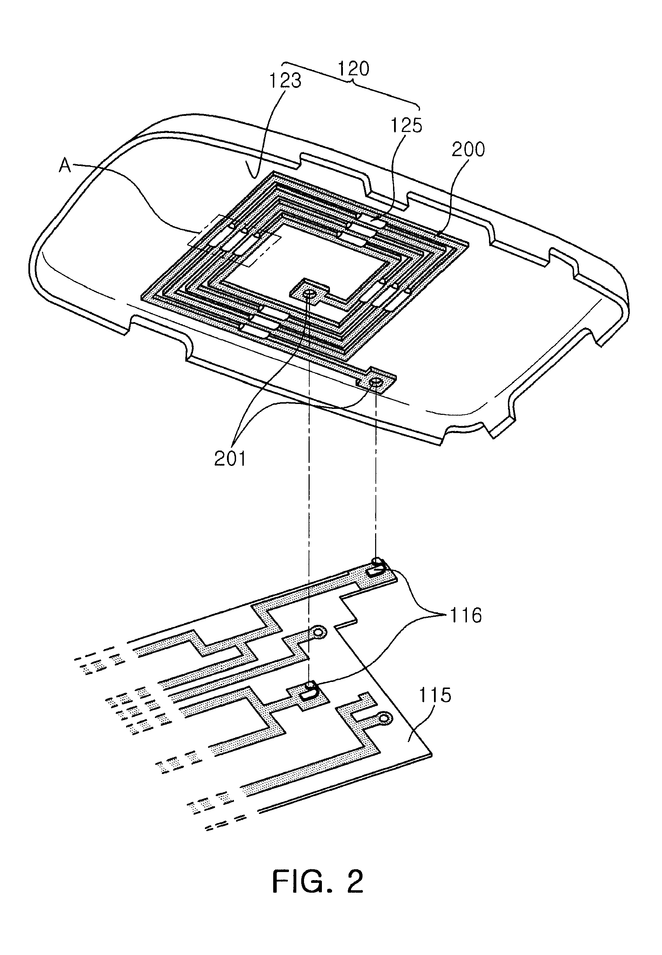

FIG. 1 is a partially cut-away perspective view of a communication terminal according to a first embodiment of the present invention, and FIG. 2 is a partially exploded perspective view of the communication terminal of FIG. 1.

Referring to FIGS. 1 and 2, a communication terminal 100 according to a first embodiment of the present invention may include a terminal main body 110, an antenna 200, and a cover 120.

The terminal main body 110 is formed by the coupling of major components of the communication terminal 100, and performs major functions of the communication terminal 100. To this end, the terminal main body 110 may include a circuit board 115 therein.

Various elements for driving the communication terminal 100 may be mounted on the circuit board 115, and in particular, a wireless module (not shown) for transmitting and receiving radio signals to and from the exterior may be mounted thereon. Also, connection terminals 116 for electrically connecting the wireless module and the antenna 200 (to be described) may be provided on the circuit board 115.

The antenna 200 may include only a metal radiator having a particular pattern, or an insulating layer may be formed at the outside of the metal radiator and used as necessary. Also, a metal pattern may be formed on a flexible film and used as the antenna 200.

Thus, the antenna 200 according to this embodiment may be formed by pressing a metal thin plate, and a metal pattern may be formed on a film (e.g., a flexible board, or the like) using a method such as sputtering, printing, plating, stamping, drawing, dispensing, or the like.

The antenna 200 may include contact portions 201 formed at the ends of the pattern and electrically connected with the connection terminals 116 of the circuit board 115.

The antenna 200 according to the present embodiment is a low frequency antenna, which is larger than a high frequency antenna. Also, the antenna 200 according to the present embodiment may be fixedly fastened to the cover 120.

The cover 120, forming a portion of the case of the communication terminal 100, is coupled with the terminal main body 110 to form the communication terminal 100. The cover 120 may be a battery cover 120 provided to separate a battery (not shown) from the terminal main body 110 or change a battery. However, the cover 120 is not limited thereto and various parts may be applicable so long as they form the case of the communication terminal 100.

The foregoing antenna 200 may be fixed to a surface of the cover 120.

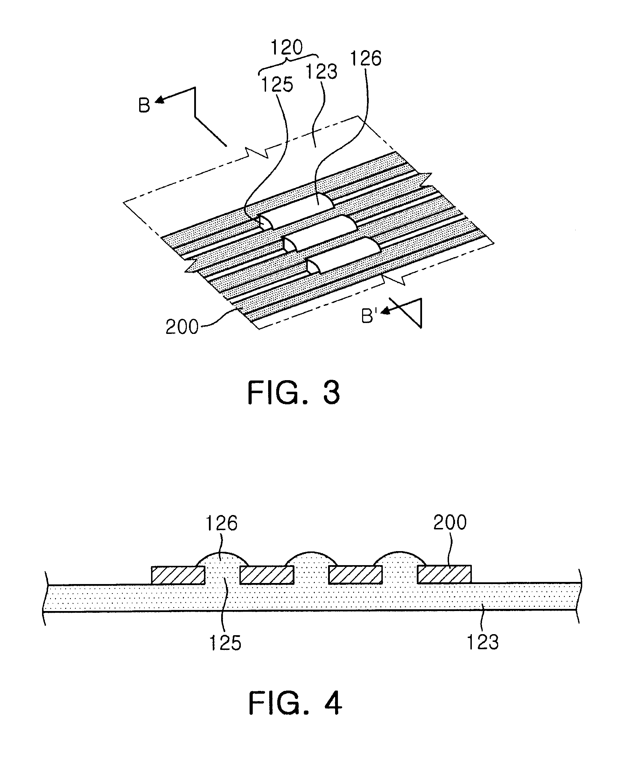

FIG. 3 is an enlarged perspective view of a portion A of FIG. 2, and FIG. 4 is a cross-sectional view taken along line B-B' of FIG. 3.

Referring to FIGS. 3 and 4, the cover 120 according to the present embodiment includes a plate 123 and a plurality of fixing protrusions 125.

The plate 123, forming the body of the cover 120, may have the form of an entirely flat plate, and a specific shape of the plate 123 corresponds to an overall shape of the communication terminal 100.

The fixing protrusions 125 are protruded from an inner face of the plate 123. The fixing protrusions 125 according to the present embodiment have an extended linear shape along the pattern form of the antenna 200 between the patterns of the antenna 200. Because the fixing protrusion 125 have a linear shape, rigidity of the plate 123 can be reinforced by the fixing protrusions 125.

However, the shape of the fixing protrusions 125 is not limited thereto. Namely, the fixing protrusions 125 may have various other shapes such as a cylindrical shape, a conical shape, or the like, as necessary.

An extending portion 126 is formed at an end of each of the fixing protrusions 125 such that the section of each of the fixing protrusions 125 is extendd. In this case, the section of the extending portion 126 may extend in a direction parallel to the plate 123.

The fixing protrusions 125 are provided to fix the antenna 200. As shown in FIG. 4, the respective patterns of the antenna 200 according to the present embodiment are disposed between the fixing protrusions 125. Namely, one surface of the antenna 200 is disposed to be in contact with the inner face of the plate 123, and the other surface of the antenna 200 is fixedly supported by the extending portions 126.

Accordingly, the antenna 200 is firmly fixed to the inner face of the plate 123, and cannot be separated from the plate 123.

In this manner, the antenna 200 is fixedly fastened to the cover 120 according to the present embodiment by using the fixing protrusions 125 and the extending portions 126. Thus, various numbers of fixing protrusions 125 may be formed at various positions correspondingly according to the shape or size of the antenna 200.

In the present embodiment, a case in which the plurality of fixing protrusions 125 are disposed in a row at four sides facing each other correspondingly according to a quadrangular volution (or vortex) shape of the antenna 200 is illustrated. However, the present invention is not limited thereto, and the fixing protrusions 125 may be formed at the apex portions of the quadrangular shape, or a larger number of fixing protrusions 125 may be disposed in various forms. Namely, various applications may be possible.

In the communication terminal 100 according to the present embodiment configured as described above, the antenna 200 can be fixedly fastened to the cover 120 by using the fixing protrusions 125 formed on the cover 120 without having to use an adhesive member such as an adhesive, an adhesive tape, or the like.

Thus, a separate adhesive member and a process otherwise required for attaching the adhesive member to the cover 120 are omitted, thus reducing manufacturing costs and simplifying the manufacturing process.

Also, in the communication terminal 100 according to the present embodiment, even when an antenna, such as a low frequency antenna, having a relatively large size is employed, the antenna can be firmly fixed by forming a various number of fixing protrusions 125 at various positions as necessary.

A method of manufacturing the communication terminal according to the first embodiment of the present invention will now be described in detail. The configuration of the foregoing communication terminal 100 will be clarified from the description of the manufacturing method hereinafter.

The characteristics of the communication terminal 100 according to the present embodiment lie in a coupling structure of the cover 120 to which the antenna 200 is fixedly fastened so as to be integratedly formed with the antenna 200. Thus, a description of the method of manufacturing the communication terminal 100 which is generally known will be omitted, while a method of coupling the cover 120 and the antenna 200 to integrally manufacture them will be largely described.

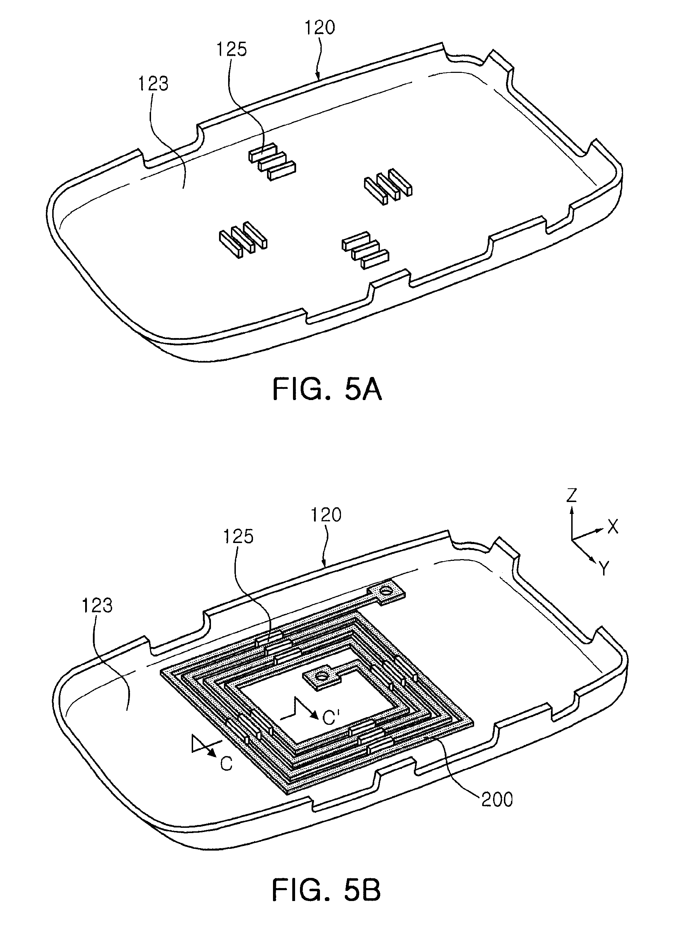

FIGS. 5A through 5C are views for explaining a method of manufacturing the communication terminal according to the first embodiment of the present invention.

Referring to FIGS. 5A through 5C, in the method of manufacturing the communication terminal 100 according to the present embodiment, first, the cover 120 having the fixing protrusions 125 formed thereon as shown in FIG. 5A is prepared. The prepared cover 120 includes only the plurality of fixing protrusions 125 formed on the inner face of the plate 123, and the extending portions (126 in FIG. 3) extending sectional areas of the fixing protrusions 125 are not formed yet.

Here, the fixing protrusions 125 are protruded to be higher than the thickness of the antenna 200 to be coupled to the cover 120.

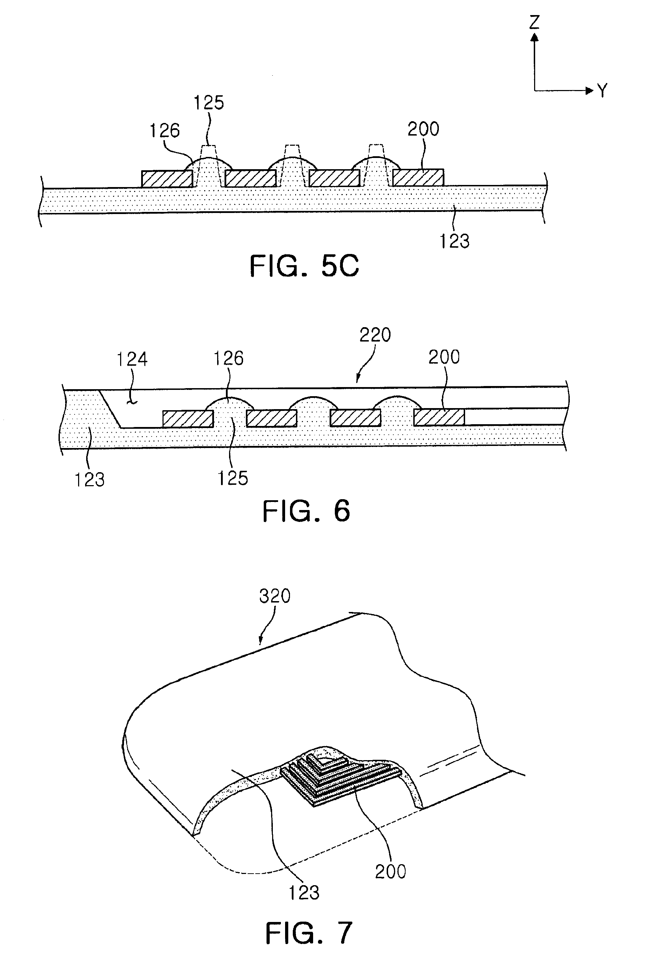

Also, as illustrated by the dotted lines in FIG. 5C, the fixing protrusions 125 may be formed such that a sectional area of an end is smaller than that of other portions thereof. For example, a vertical section of each of the fixing protrusions 125 may have a trapezoid shape, such that the sectional area of each of the fixing protrusions 125 is reduced toward the end of each of the fixing protrusions 125. However, the present invention is not limited thereto, and the section of each of the fixing protrusions 125 may be variable; it may have a triangular shape or a semi-circular shape.

Subsequently, as shown in FIG. 5B, coupling the antenna 200 to the cover 120 is performed. The antenna 200 is coupled to the cover 120 as the fixing protrusions 125 are inserted into spaces between the patterns of the antenna 200. In this case, as previously mentioned, the sectional areas of the ends of the fixing protrusions 125 are reduced, so the fixing protrusions 125 can be easily inserted into the spaces between the patterns of the antenna 200.

In the present embodiment, since the fixing protrusions 125 are inserted in all directions of the antenna 200, the antenna 200 coupled to the cover 120 can be prevented from moving in an X or Y axis direction by the fixing protrusions 125.

Meanwhile, as mentioned above, the fixing protrusions 125 are protruded to be higher than the thickness of the antenna 200. Thus, when the antenna 200 is coupled to the cover 120, the ends of the fixing protrusions 125 are projected above the antenna 200 through the spaces between the patterns of the antenna 200.

Thereafter, the extending portions 126 are formed. FIG. 5C is a cross-sectional view taken along line C-C' of FIG. 5B. Referring to FIG. 5C, the extending portions 126 according to the present embodiment may be formed through ultrasonic welding (or fusion). Namely, when ultrasonic waves are applied to the ends of the fixing protrusions 125 protruded upwardly of the antenna 200, the ends of the fixing protrusions 125 are softened and melted to form the extending portions 126 with an extended sectional area.

In this process, gravitation may be used to allow the extending portions 126 to be tightly attached to the antenna 200, and the extending portions 126 may be formed by pressing the ends of the fixing protrusions 125 by using a separate member.

Accordingly, since an upper surface of the antenna 200 is supported by the extending portions 126, the antenna 200 is prevented from moving in a Z axis direction. Thus, the antenna 200 is fixedly fastened to the cover 120 and is integrally formed with the cover 120.

Meanwhile, in the present embodiment, the case of using ultrasonic welding to form the extending portions 126 is taken as an example, but the present invention is not limited thereto. Namely, any method may be extensively employed so long as it can form the extending portions 126 at the respective ends of the fixing protrusions 125, such as softening and melting the ends of the fixing protrusions 125 by directly applying heat thereto, or the like.

The communication terminal and the method of manufacturing the same as described above are not limited to the foregoing embodiment and may be variably applicable.

A communication terminal according to embodiments of the present invention described hereinafter is configured to have a similar structure to that of the communication terminal (100 in FIG. 1) of the foregoing embodiment, except for a cover structure. Thus, the same reference numerals will be used for the same components and a description thereof will be omitted. The cover structure will now be described in detail.

FIG. 6 is a cross-sectional view of a cover of a communication terminal according to a second embodiment of the present invention.

A cover 220 according to the present embodiment includes a coupling recess 124 formed on the inner face of the plate 123, in which the antenna 200 is mounted. The fixing protrusions 125 are protruded from a bottom surface of the coupling recess 124.

FIG. 6 shows an example in which the coupling recess 124 is formed to be deeper than the thickness of the antenna 200. However, the present invention is not limited thereto, and the depth of the coupling recess 124 may be variable. Namely, over the thickness of the plate 123, the coupling recess 124 may be thinner than the thickness of the antenna 200 or may have a depth equal to the thickness of the antenna 200.

When the coupling recess 124 is deeper than the thickness of the antenna 200 as shown in FIG. 6, the fixing protrusions 125 and the extending portions 126 may be entirely accommodated within the coupling recess 124, rather than being protruded from the outside of the plate 123. Thus, in this case, the overall thickness of the cover 220 to which the antenna 200 is coupled can be minimized.

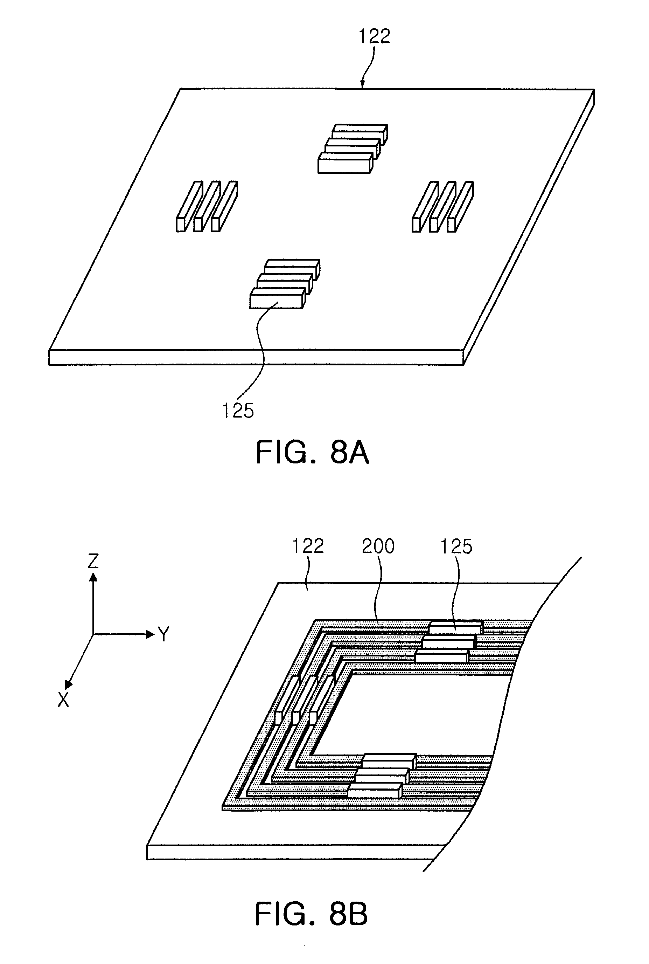

FIG. 7 is a partially cut-away perspective view of a cover of a communication terminal according to a third embodiment of the present invention, and FIGS. 8A through 8E are views for explaining a method of manufacturing the communication terminal according to the third embodiment of the present invention.

Referring to FIG. 7, the antenna 200 is buried in the interior of the plate 123 of a cover 320 according to the present embodiment. Thus, unlike the fixing protrusions (125 in FIG. 3) in the foregoing embodiments, the fixing protrusions are not protruded outwardly from one surface of the plate 123.

A method of manufacturing the cover 320 according to the present embodiment will now be described with reference to FIGS. 8A through 8E.

In the method of manufacturing the cover 320 according to the present embodiment, first, as shown in FIG. 8A, a support plate 122 having fixing protrusions 125 formed thereon is prepared. The prepared support plate 122 may be a flat plate made of a resin material and formed by injection molding, and the plurality of fixing protrusions 125 are formed on one surface of the support plate 122. The extending portions 126 are not formed at the ends of the fixing protrusions 125 yet. Likewise, as in the foregoing embodiments, the fixing protrusions 125 are formed such that a sectional area of the end is smaller than that of other portions, and accordingly, the fixing protrusions 125 can be easily inserted in the spaces between the patterns of the antenna 200.

Subsequently, as shown in FIG. 8B, coupling the antenna 200 to the support plate 122 is performed. The antenna 200 is coupled to the support plate 122 as the fixing protrusions 125 are inserted into the spaces between the patterns of the antenna 200. In the present embodiment, because the fixing protrusions 125 are inserted in all directions of the antenna 200, the antenna 200 coupled to the support plate 122 can be prevented from moving in an X or Y axis direction by the fixing protrusions 125.

Meanwhile, the antenna 200 according to the present embodiment may be configured such that the antenna 200 is fixed to one surface of the support plate 122 and a contact portion (not shown) of the antenna 200 is formed on the other surface of the support plate 122. In this case, the contact portion may pass to the other surface of the support plate 122 by way of the corner of the support plate 122, or a through hole (not shown) may be formed on the support plate 122 to allow the contact portion to pass therethrough to the other surface of the support plate 122.

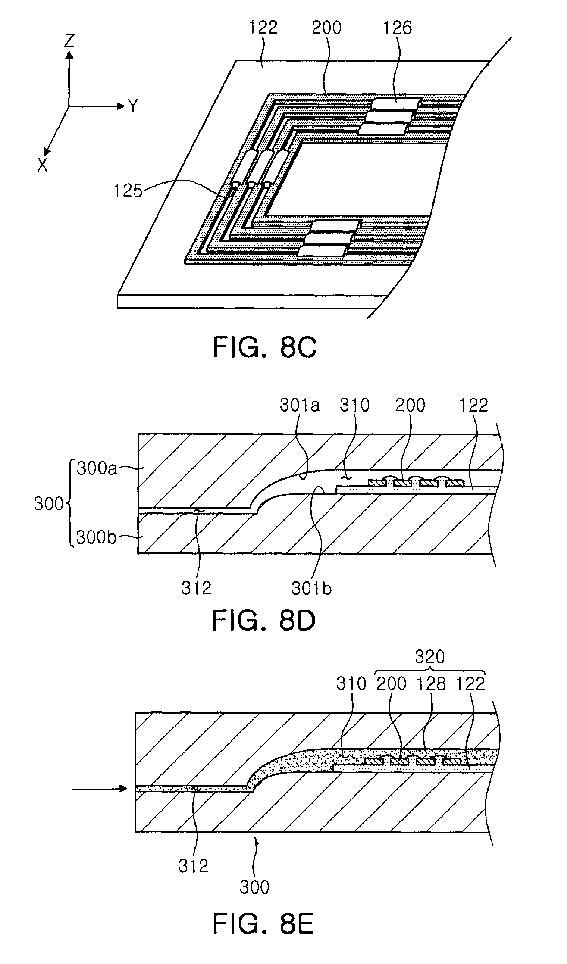

Thereafter, as shown in FIG. 8C, the extending portions 126 are formed. Likewise as in the foregoing embodiment, the extending portions 126 may be formed by ultrasonic welding. Accordingly, the antenna 200 can be prevented from moving in the Z axis direction by the extending portions 126 and integrally formed with the support plate 122.

Meanwhile, while the manufacturing process is ongoing, if the antenna 200 is highly unlikely to move in the Z axis direction, the forming of the extending portions may be omitted.

Subsequently, as shown in FIG. 8D, the support plate 122 coupled to the antenna 200 is disposed in a mold 300.

FIG. 8D shows a cross-section in which the support plate 122 having the antenna 200 coupled thereto is mounted in the mold 300. The mold 300 according to the present embodiment is an injection mold, and the cover 320 of the communication terminal 100 according to the present embodiment is formed by injection molding.

The mold 300 may include an upper mold 300a and a lower mold 300b. An internal space 310 having a cover-like shape is formed in the interior of the mold 300 by the upper mold 300a and lower mold 300b, and the support plate 122 according to the present embodiment is disposed in the internal space 310.

The mold 300 may have an inlet path 312 allowing a molding material, i.e., a resin, injected from the outside to move therealong to the internal space of the mold.

In addition, in the mold 300 according to the present embodiment, a support plate fixing part (not shown) may be formed at a portion at which the support plate 122 is mounted. The support plate fixing part is provided to prevent the support plate 122 from moving within the mold 300. In detail, the support plate fixing part may be formed on an inner face 301b of the lower mold 300b, and may have the form of a protrusion protruded along the vicinity of the support plate 122 or may have the form of a recess according to the shape of the support plate 122. However, the shape of the support plate fixing part is not limited thereto.

Meanwhile, the internal space 310 of the mold 300 is formed to have a thickness greater than that of the support plate 122. Thus, when the support plate 122 is disposed in the internal space 310 of the mold 300, only a lower face of the support plate 122 is in contact with an inner face 301b of the lower mold 300b, and an upper surface of the support plate 122 is maintained to be spaced apart from an inner face 301a of the upper mold 300a.

Also, the support plate 122 is mounted in the mold 300 such that the antenna 200 is positioned at an upper portion. Accordingly, the antenna 200 disposed on the upper surface of the support plate 122 is not in contact with the inner face 301a of the upper mold 300a and disposed in the internal space 310 of the mold 300.

When the support plate 122 is mounted in the internal space 310 of the mold 300, as shown in FIG. 8E, a resin 128 is injected into the mold 300 through the inlet path 312 and the forming of the cover 320 is completed. In this case, the resin 128 injected into the mold 300 covers the antenna 200 on the support plate 122, forming the cover 320.

Accordingly, when the resin 128 is completely hardened, the antenna 200 disposed between the support plate 122 and the hardened resin 128 (referred to as an 'injection-molded product' , hereinafter) is completely buried in the interior of the cover 320, and accordingly, the forming of the cover 320 according to the present embodiment as shown in FIG. 7 is completed.

Here, the resin 128 injected into the interior of the mold 300 may be made of the same material as that of the support plate 122. In this case, as shown in FIG. 7, the completed cover 320 may be integrally formed to the extent that the boundary of a portion formed by the support plate 122 and the injection-molded product 128 may not easily be discriminated.

However, the present invention is not limited thereto, and variations can be made. Namely, the support plate 122 and the resin 128 injected into the interior of the mold 300 are made of different materials, or the like, as necessary.

In the communication terminal and the method of manufacturing the same according to the embodiments of the present invention, the antenna can be easily fixedly fastened to the cover or the support plate by using the fixing protrusions formed on the cover or the support plate without having to use an adhesive member such as an adhesive, an adhesive tape, or the like.

Thus, the manufacturing cost and manufacturing process can be minimized as compared with the related art in which an adhesive member is used.

Also, although the communication terminal uses an antenna having a relatively large size, such as a low frequency antenna, various numbers of fixing protrusions may be formed at various positions, as necessary.

Thus, the antenna can be easily integrally formed with the cover. In addition, when double injection molding is performed after the antenna is fixedly fastened to the support plate, the antenna is prevented from moving within the mold or the injection-molded product is prevented from being bent.

Meanwhile, the communication terminal and the method of manufacturing the same are not limited to the foregoing embodiments and variably applicable. For example, in the foregoing embodiment, the case in which after the antenna is coupled to the support plate, the cover is formed through double injection molding is taken as an example, but conversely, the cover may first be coupled to the antenna and then the antenna may be buried through double injection molding, or the like. Namely, various configurations may be used.

Also, in the foregoing embodiments, the case in which the antenna is coupled to the cover or buried is taken as an example, but the present invention is not limited thereto. Namely, the present invention can be easily applicable to any portion of the case where the terminal body including the cover is formed.

In addition, in the present embodiment, the communication terminal having the antenna is taken as an example, but the present invention is not limited and can be extensively applicable to any electronic devices having an antenna.

As set forth above, in a communication terminal and a manufacturing method thereof according to embodiments of the invention, since an antenna is buried in a case of the communication terminal so as to be integrally formed with the case, the problem of the related art external type antenna in which the antenna is vulnerable to an external impact and the problem of the related art internal type antenna in which the volume is increased can be solved.

While the present invention has been shown and described in connection with the embodiments, it will be apparent to those skilled in the art that modifications and variations can be made without departing from the spirit and scope of the invention as defined by the appended claims.

## Claims

1. A communication terminal comprising:
a case forming an external appearance of the communication terminal and having a plurality of fixing protrusions formed on one surface thereof; and
an antenna inserted between the plurality of fixing protrusions so as to be coupled with the case,
wherein the antenna is integrally fixed to the case by an extending portion having a sectional area increased at an end of each of the fixing protrusions.

2. The communication terminal of claim 1, wherein the extending portion is formed such that the end of each of the fixing protrusions is softened and melted.

3. The communication terminal of claim 1, wherein the extending portion is formed by ultrasonic welding.

4. The communication terminal of claim 1, wherein the antenna is a radiator having a metal pattern shape.

5. The communication terminal of claim 1, wherein the case has a coupling recess formed in one surface thereof, and
the antenna is mounted in the coupling recess so as to be coupled therewith.

6. A communication terminal comprising:
a case including a support plate having a plurality of fixing protrusions formed on one surface thereof and an injection-molded product covering one surface of the support plate and integrally formed with the support plate; and
an antenna interposed between the support plate and the injection-molded product and buried in an interior of the case,
wherein the antenna is inserted between the fixing protrusions of the support plate and integrally fixed to the support plate by an extending portion having a sectional area increased at an end of each of the fixing protrusions.

7. The communication terminal of claim 6, wherein the extending portion is formed such that the end of each of the fixing protrusions is softened and melted.

8. The communication terminal of claim 6, wherein the extending portion is formed by ultrasonic welding.

9. The communication terminal of claim 6, wherein the support plate and the injection-molded product are made of the same material.

10. A method of manufacturing a communication terminal, the method comprising:
preparing a case forming an external appearance of the communication terminal and including a plurality of fixing protrusions formed on one surface thereof;
coupling an antenna to the case such that the antenna is inserted between the plurality of fixing protrusions; and
forming an extending portion supporting an upper surface of the antenna by increasing a sectional area of an end of each of the fixing protrusions.

11. The method of claim 10, wherein the forming of the extending portion comprises forming the extending portion by softening and melting the end of each of the fixing protrusions through ultrasonic welding.

12. A method of manufacturing a communication terminal, the method comprising:
preparing a support plate including a plurality of fixing protrusions formed on one surface thereof;
coupling an antenna to the support plate such that the antenna is inserted between the fixing protrusions of the support plate; and
burying the antenna by covering one surface of the support plate with an injection-molded product.

13. The method of claim 12, further comprising forming an extending portion supporting an upper surface of the antenna by increasing a sectional area of an end of each of the fixing protrusions, after the coupling of the antenna to the support plate.

14. The method of claim 13, wherein the forming of the extending portion comprises forming the extending portion by softening and melting the end of each of the fixing protrusions through ultrasonic welding.

15. The method of claim 12, wherein the burying of the antenna comprises:
disposing the support plate within a mold such that the antenna faces upward;
injecting a resin into the mold; and
hardening the resin to form the inj ection-molded product.

16. The method of claim 12, wherein the support plate and the injection-molded product are made of the same material.
